# FASCICULE DE BREVET EUROPEEN

(11) **EP 2 748 021 B1**
(45) Date de publication et mention de la délivrance du brevet: **30.12.2015**
(21) Numéro de dépôt: 12787759.5
(22) Date de dépôt: 04.10.2012
(51) Int. Cl.: B29D 30/00

(54) **KIT ET PROCEDE POUR LA FIXATION TEMPORAIRE D'UN DISPOSITIF ELECTRONIQUE SUR UN SUPPORT D'UNE ENVELOPPE PNEUMATIQUE**
KIT UND VERFAHREN ZUR VORÜBERGEHENDEN BEFESTIGUNG EINER ELEKTRONISCHEN VORRICHTUNG AN EINEM TRÄGER FÜR EINEN LUFTREIFEN
KIT AND METHOD FOR THE TEMPORARY ATTACHMENT OF AN ELECTRONIC DEVICE TO A SUPPORT FOR A PNEUMATIC TYRE

(30) Priorité: 05.10.2011 FR 1158987
(43) Date de publication de la demande: 02.07.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: Battocchio claudio, 63040 Clermont-Ferrand Cedex 9 (FR); Penot Thierry, 63040 Clermont-Ferrand Cedex 9 (FR); Voissier Pierre, 63040 Clermont-Ferrand Cedex 9 (FR)
(74) Mandataire: Dequire, Philippe Jean-Marie Denis
(86) Numéro de dépôt international: PCT/FR2012/052250
(87) Numéro de publication internationale: WO 2013/050711

(56) Documents cités:
- EP-A1- 1 459 911
- DE-A1-102007 001 279
- DE-C1- 4 426 022
- US-A1- 2001 014 377
- US-A1- 2003 155 054

## Description

La présente invention concerne le domaine des enveloppes pneumatiques. Il concerne plus particulièrement le domaine du suivi des enveloppes pneumatiques lors de procédés de traitement des enveloppes pneumatiques, notamment de procédés de rechapage.

Dans ce qui suit, une enveloppe pneumatique désigne une ébauche crue de pneumatique, un pneumatique vulcanisé neuf ou usé, une structure de pneumatique en cours de rechapage ou bien encore un pneumatique rechapé. L'invention s'applique à tout type d'enveloppe pneumatique, notamment celles destinées à équiper des véhicules à moteur de type tourisme, SUV ("Sport Utility Vehicles"), deux roues (notamment motos), avions, véhicules industriels choisis parmi camionnettes, "Poids-lourds" - c'est-à-dire métro, bus, engins de transport routier (camions, tracteurs, remorques), véhicules hors-la-route tels qu'engins agricoles ou de génie civil -, ou autres véhicules de transport ou de manutention.

Généralement, l'enveloppe est traitée sur un site approprié. L'enveloppe est donc expédiée sur le site de traitement, traitée sur ce site puis réexpédiée vers un site d'utilisation. On souhaite tracer et suivre chaque enveloppe pendant son traitement. A cet effet, on fixe un dispositif électronique d'identification sur l'enveloppe lors de la réception de l'enveloppe et on le sépare de l'enveloppe avant l'expédition de cette dernière. On connaît de l'état de la technique un procédé de fixation temporaire du dispositif dans lequel on fixe le dispositif sur l'enveloppe au moyen d'une ceinture positionnée dans un plan méridien de l'enveloppe et permettant de plaquer le dispositif contre une surface interne de l'enveloppe.

Toutefois, ce procédé de fixation temporaire est relativement fastidieux et coûteux. En outre, il est nécessaire de disposer de plusieurs ceintures présentant des tailles différentes pour les différentes dimensions d'enveloppes.

On connaît du document DE 4426022 un dispositif d'identification d'un objet destiné à être fixé sur un pneumatique. Ce dispositif comprend un transpondeur pour le stockage et la récupération de données de caractéristiques sur l'objet placé dans un réceptacle en caoutchouc ou en plastique destiné à être fixé sur le pneumatique à l'aide d'une couche d'adhésif.

On connaît du document DE 10 2007 001279 un pneumatique dans lequel sont noyés les composants d'un module électronique disposé sur son côté intérieur. Le module comprend deux couches d'étanchéité de propriétés physiques différentes, dont l'une est reliée par une couche d'adhésif au côté intérieur du pneu.

On connaît du document EP 1 459 911 un procédé de fixation d'une étiquette sur la surface d'un pneumatique dans lequel on fabrique un film à partir d'un substrat comprenant un adhésif sensible à la pression sur une première de ses faces qui est découpé selon une forme lui permettant de recevoir l'étiquette puis collé, par sa première face, à la surface intérieure du pneumatique avant la cuisson de ce dernier.

On connaît du document US 2001/014377 une étiquette pour pneumatique comprenant une feuille et un matériau protecteur déposé sur la feuille dans lequel est réalisée une cavité. L'étiquette est fixée sur le pneumatique soit à l'aide d'une bande adhésive, soit par dépôt d'un adhésif sensible à la pression sur la surface inférieure de la feuille.

L'invention a donc pour but de permettre une fixation temporaire plus simple et plus économique.

A cet effet, l'invention a pour objet un kit pour la fixation temporaire d'un dispositif électronique sur un support d'une enveloppe pneumatique comprenant:
- un organe de fixation comprenant une masse d'adhésif pour la fixation du dispositif électronique sur le support,
- un élément de séparation pour séparer la masse d'adhésif du support apte à adhérer à la masse d'adhésif,
- l'adhérence entre la masse d'adhésif et l'élément de séparation devenant supérieure à l'adhérence entre la masse d'adhésif et le support en fonction de la variation d'au moins un paramètre de la masse d'adhésif. Cette adhérence (force d'adhérence) se comprend compte tenu de l'interposition du dispositif électronique qui peut réduire la surface d' adhérence avec l'élément de séparation.

Le kit selon l'invention permet d'assurer un suivi fiable de l'enveloppe. En effet, le dispositif électronique peut assurer des fonctions d'identification de l'enveloppe, d'écriture et/ou de lecture de données relatives au procédé de traitement et/ou à l'enveloppe, etc. L'utilisation de la masse d'adhésif permet de fixer simplement et rapidement le dispositif sur le support de l'enveloppe par adhérence et permet de s'affranchir de la fixation par ceinture de l'état de la technique. En outre, la masse d'adhésif est indépendante de la dimension de l'enveloppe. Enfin, les éléments du kit sont peu onéreux ce qui permet de réaliser un suivi peu coûteux de l'enveloppe.

De plus, lorsque la valeur du paramètre est choisie de sorte que l'adhérence entre la masse d'adhésif et l'élément de séparation est supérieure à l'adhérence entre la masse d'adhésif et le support, on peut retirer le dispositif et la masse d'adhésif sans dégrader l'enveloppe. Lorsque la valeur du paramètre est choisie de sorte que l'adhérence entre la masse d'adhésif et le support est supérieure à l'adhérence entre la masse d'adhésif et l'élément de séparation, on assure la fixation du dispositif sur le support de l'enveloppe et on évite que l'enveloppe ne puisse être identifiée suite une désolidarisation intempestive de la masse d'adhésif.

De préférence, l'organe de fixation comprend deux films de protection de la masse d'adhésif entre lesquels est intercalée la masse d'adhésif.

Dans un mode de réalisation, l'adhérence entre la masse d'adhésif et le support est supérieure à l'adhérence entre la masse d'adhésif et au moins l'un des films de protection.

Dans un autre mode de réalisation, l'adhérence entre la masse d'adhésif et l'élément de séparation est supérieure à l'adhérence entre la masse d'adhésif et au moins l'un des films de protection.

Dans un mode de réalisation, le kit comprend un dispositif électronique.

Dans un mode de réalisation, l'élément de séparation adhère sur une surface d'adhérence de la masse d'adhésif entre la masse d'adhésif et le dispositif électronique, et le dispositif électronique est porté par la masse d'adhésif et est intercalé entre l'élément de séparation et la surface d'adhérence entre la masse d'adhésif et le dispositif électronique.

De façon optionnelle, l'organe de fixation comprend un film de protection de la masse d'adhésif adhérant sur une surface d'adhérence de la masse d'adhésif entre la masse d'adhésif et le support.

Un tel kit est facilement utilisable tel quel pour une utilisation lors du procédé de traitement. En effet, il suffit de retirer le film de protection de la masse d'adhésif pour pouvoir utiliser le kit.

L'invention a également pour objet une enveloppe pneumatique comprenant une masse d'adhésif et un élément de séparation d'un kit tel que défini ci-dessus, la masse d'adhésif adhérant sur un support de l'enveloppe.

De préférence, le support comprend une nappe de gomme intérieure.

L'invention a pour autre objet un procédé de fixation temporaire d'un dispositif électronique sur un support d'une enveloppe pneumatique, au moyen d'un kit tel que défini ci-dessus, dans lequel:
- on fait adhérer la masse d'adhésif sur le support,
- on fait porter le dispositif électronique par la masse d'adhésif,
- on fait adhérer l'élément de séparation sur la masse d'adhésif,
- on fait varier le paramètre de la masse d'adhésif de sorte que l'adhérence entre la masse d'adhésif et l'élément de séparation devient supérieure à l'adhérence entre la masse d'adhésif et le support,
- on sépare l'ensemble comprenant le dispositif électronique, la masse d'adhésif et l'élément de séparation du support de l'enveloppe pneumatique en tirant sur l'élément de séparation.

De préférence, on recouvre entièrement la masse d'adhésif par l'élément de séparation. L'élément de séparation permet d'une part, de protéger le dispositif électronique lors du procédé et d'autre part, de protéger les éléments susceptibles de rentrer en contact avec le dispositif ou avec la masse d'adhésif lors de ce procédé. Ainsi, par exemple, lors d'un procédé de rechapage, l'élément de séparation permet de protéger la membrane de cuisson du moule dans lequel l'enveloppe pneumatique est vulcanisée.

Dans un mode de réalisation:
- on retire un film de protection de l'organe de fixation de façon à dégager une surface d'adhérence de la masse d'adhésif entre la masse d'adhésif et le support,
- on fait adhérer la surface d'adhérence entre la masse d'adhésif et le support sur le support,
- on retire l'autre film de protection de l'organe de fixation de façon à dégager une surface d'adhérence de la masse d'adhésif entre la masse d'adhésif et le dispositif électronique.

Dans un autre mode de réalisation:
- on retire un film de protection de l'organe de fixation de façon à dégager une surface d'adhérence de la masse d'adhésif entre la masse d'adhésif et le dispositif électronique,
- on fait adhérer le dispositif électronique sur la surface d'adhérence entre la masse d'adhésif et le dispositif électronique,
- on fait adhérer l'élément de séparation sur la surface d'adhérence entre la masse d'adhésif et le dispositif électronique,
- on retire l'autre film de protection de l'organe de fixation de façon à dégager une surface d'adhérence de la masse d'adhésif entre la masse d'adhésif et le support,
- on fait adhérer la surface d'adhérence entre la masse d'adhésif et le support sur le support.

Avantageusement, le paramètre est la température de la masse d'adhésif.

De préférence, l'adhérence entre la masse d'adhésif et l'élément de séparation devient supérieure à l'adhérence entre la masse d'adhésif et le support lorsque la température de la masse d'adhésif est supérieure à un seuil prédéterminé de température. Typiquement, on maintient la température (T) de la masse d'adhésif (78) supérieure au seuil prédéterminé (T2) de température avant de séparer l'ensemble comprenant le dispositif électronique (62), la masse d'adhésif (78) et l'élément de séparation (84) du support (40) de l'enveloppe pneumatique (10).

L'invention a également pour objet un procédé de traitement d'une enveloppe pneumatique comprenant les étapes suivantes:
- on fixe temporairement un dispositif électronique sur un support de l'enveloppe pneumatique par un procédé tel que défini ci-dessus, et
- on traite l'enveloppe pneumatique au cours de laquelle on fait varier le paramètre (T) de la masse d'adhésif (78) de sorte que l'adhérence entre la masse d'adhésif (78) et l'élément de séparation (84) devient supérieure à l'adhérence entre la masse d'adhésif (78) et le support (40) ;
- on sépare l'ensemble comprenant le dispositif électronique, la masse d'adhésif et l'élément de séparation, après l'étape de traitement.

Avantageusement, l'enveloppe pneumatique comprenant une structure et une bande de roulement usée, au cours de l'étape de traitement:
- on retire la bande de roulement usée,
- on fixe une bande de roulement neuve crue sur la structure,
- on vulcanise l'ensemble comprenant la structure et la bande de roulement neuve crue dans un moule de vulcanisation.

Lorsque la bande de roulement de l'enveloppe est usée, on rechape l'enveloppe afin de pouvoir continuer à utiliser la structure qui n'est pas encore suffisamment usée pour nécessiter d'être remplacée. Lors du rechapage, on fixe temporairement le dispositif et on assure le suivi de la structure entre sa réception et son expédition. Le suivi a notamment pour but de s'assurer que la structure qui est expédiée suite au rechapage est bien celle qui a été reçue.

L'invention sera mieux comprise à la lecture de la description qui va suivre, donnée uniquement à titre d'exemple non limitatif et faite en se référant aux dessins dans lesquels :
- la figure 1 est une vue en coupe radiale d'une enveloppe pneumatique comprenant une bande de roulement neuve;
- la figure 2A est une vue en perspective d'un dispositif électronique d'un kit selon l'invention;
- la figure 2B est une vue du dispositif de la figure 2A selon le plan de coupe A-A;
- la figure 3 est une vue en perspective d'un organe électronique du dispositif des figures 2A et 2B;
- la figure 4 est une vue en perspective d'un organe de fixation du kit selon l'invention;
- la figure 5 est une vue en perspective d'un élément de séparation du kit selon l'invention;
- la figure 6 est une vue en coupe radiale de l'enveloppe pneumatique de la figure 1 dans laquelle la bande de roulement est usée;
- les figures 7A à 7E illustrent des étapes d'un procédé de fixation temporaire du dispositif des figures 2A et 2B selon un premier mode de réalisation de l'invention lors d'un procédé de traitement de l'enveloppe pneumatique de la figure 6;
- la figure 8 est une vue analogue à celle de la figure 6 de l'enveloppe pneumatique de laquelle on a retiré la bande de roulement usée;
- la figure 9 est une vue analogue à celle de la figure 6 de l'enveloppe pneumatique de la figure 8 comprenant une bande de roulement neuve;
- les figures 10A à 10E illustrent des étapes d'un procédé de fixation temporaire du dispositif des figures 2A et 2B selon un deuxième mode de réalisation de l'invention lors d'un procédé de traitement de l'enveloppe pneumatique de la figure 6;
- la figure 11 illustre un kit selon une variante de l'invention.

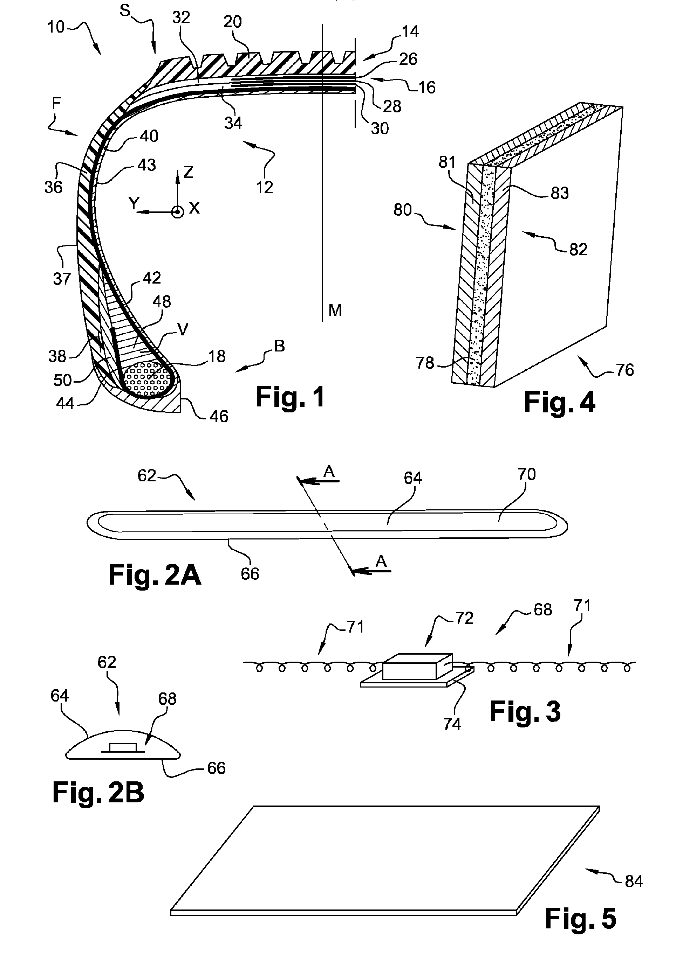

Sur les figures 1 et 6, 7A à 7E, 8, 9 et 10A à 10E, on a représenté des axes X, Y, Z orthogonaux entre eux correspondant aux orientations habituelles circonférentielle (X), axiale (Y) et radiale (Z) d'une enveloppe pneumatique.

On a représenté sur la figure 1 une enveloppe pneumatique désignée par la référence générale 10. En l'espèce, l'enveloppe pneumatique 10 est destinée à être montée sur une roue de véhicule automobile de type poids lourd.

L'enveloppe pneumatique 10 est un pneumatique comprenant une structure 12 et une bande de roulement 14 neuve.

La structure 12 comprend une armature centrale 16 prolongée par deux flancs F et deux bourrelets B. Un seul flanc F et un seul bourrelet B sont représentés sur les figures. La bande de roulement 14 et l'armature centrale 16 de la structure 12 forment un sommet S de l'enveloppe pneumatique 10.

Deux tringles 18 (une seule est représentée) sont noyées dans les bourrelets B. Les deux tringles 18 sont agencées symétriquement par rapport à un plan radial médian M de l'enveloppe pneumatique. Chaque tringle 18 est de révolution autour d'un axe de référence. Cet axe de référence, sensiblement parallèle à la direction Y, est sensiblement confondu avec un axe de révolution de l'enveloppe pneumatique 10.

La bande de roulement 14 comprend des sculptures 20. L'armature 16 comprend des nappes métalliques 26, 28 et 30 noyées dans des masses de gomme 32 et 34. Une masse de gomme 36 s'étend radialement du sommet jusqu'au niveau de la tringle 18 du bourrelet B en délimitant une surface extérieure 37 du flanc F et du bourrelet B. De plus, dans l'exemple décrit, le bourrelet B comprend une nappe annulaire 38 constituée de renforts métalliques inclinés par rapport à la direction circonférentielle.

L'enveloppe pneumatique 10 comprend également une nappe de gomme intérieure étanche 40 ainsi qu'une nappe carcasse 42. Ces nappes 40 et 42 sont de forme générale toroïdale et sont toutes deux coaxiales aux tringles 18. Les nappes 40 et 42 s'étendent entre les deux tringles annulaires 18 de l'enveloppe pneumatique 10 en passant par le sommet S. La nappe 40 présente une surface interne 43 destinée à être en contact avec l'air contenu à l'intérieur de l'enveloppe.

Le bourrelet B comprend également une masse de gomme de protection 46 annulaire destinée à permettre, en partie, l'accrochage radial et axial de l'enveloppe pneumatique 10 sur une jante. Le bourrelet B de l'enveloppe pneumatique 10 comprend également des masses de gomme 48, 50 de bourrage d'un volume compris entre la nappe carcasse 42 et la masse 36.

On a représenté sur les figures 2A, 2B et 3 à 5 différents éléments d'un kit pour la fixation temporaire d'un dispositif électronique sur un support de l'enveloppe 10. Le kit est désigné par la référence générale 60.

On a représenté sur les figures 2A et 2B un dispositif électronique 62 d'identification du kit 60. Le dispositif électronique 62 présente une forme générale allongée de longueur égale à 60 mm et de largeur égale à 13 mm. Le dispositif 62 comprend un organe électronique 68 enrobé d'une masse de gomme 70 vulcanisée et de préférence isolante. La masse de gomme 70 est délimitée par une surface bombée 64 opposée à une surface plane 66. En variante, l'organe électronique 68 du dispositif 62 est nu, c'est-à-dire non enrobé de gomme.

On a représenté sur la figure 3 l'organe électronique 68. L'organe 68 comprend deux antennes 71 et une puce électronique 72. L'organe 68 comprend également un support 74 de la puce 72. La puce 72 comprend un transpondeur à identification par radiofréquence (RFID) passif fonctionnant à 868 MHz. Les deux antennes 71 constituent une antenne dipôle.

On a représenté sur la figure 4 un organe 76 de fixation du dispositif 62 sur l'enveloppe 20. L'organe 76 présente une forme générale rectangulaire de largeur égale à 25 mm et de longueur égale à 75 mm. L'organe 76 comprend une masse d'adhésif 78 pour la fixation du dispositif 62 sur un support, ici la nappe 40. La masse 78 forme une couche intercalée entre deux films 80, 82 de protection de la masse 78. La couche de la masse 78 présente une épaisseur supérieure à 30 micromètres, de préférence comprise entre 40 et 100 micromètres. De préférence, la masse d'adhésif 78 étant isolante, le fonctionnement du dispositif électronique est amélioré. Le film 80 comprend une feuille 81 de support et de protection de la masse 78. La feuille 81 présente une surface très lisse et est réalisé en papier glacé revêtu d'un revêtement en PTFE (polytetrafluoroéthylène) ou en PE (polyéthylène). Le film 82 comprend une feuille 83 de protection de la masse 78.

L'adhésif de la masse 78 est un adhésif sensible à la pression. De préférence, l'adhésif comprend au moins un polymère acrylique, par exemple à base de polybutyl acrylate, et/ou au moins un copolymère acrylique, par exemple à base d'isooctyl acrylate/acide acrylique. En l'espèce, l'adhésif comprend plus de 50% en masse du polymère et/ou du copolymère en masse totale d'adhésif, de préférence plus de 75% et plus préférentiellement plus de 90 %. Un tel adhésif sensible à la pression a en effet un caractère collant ou « tack » suffisant sans qu'il soit nécessaire d'ajouter un tackifiant.

Le kit 60 comprend également un élément 84 de séparation de la masse 78 par rapport au support 40 et représenté sur la figure 5. L'élément 84 est apte à adhérer à la masse d'adhésif 78 et présente une forme générale rectangulaire de largeur supérieure à 25 mm et de longueur supérieure à 75 mm. Grâce à ces dimensions, l'élément 84 est apte à recouvrir entièrement la masse 78. L'élément 84 est réalisé en papier sulfurisé ou en PTFE. L'élément de séparation est susceptible de supporter des températures supérieures à 200°C.

L'adhérence F1 entre la masse d'adhésif 78 et le support 40 est supérieure à l'adhérence F2 entre la masse d'adhésif 78 et au moins l'un des films de protection 80, 82, ici le film 80.

L'adhérence F3 entre la masse d'adhésif 78 et l'élément de séparation 84 est supérieure à l'adhérence F2 entre la masse d'adhésif 78 et au moins l'un des films de protection 80, 82, ici le film 80

L'adhérence F3 entre la masse d'adhésif 78 et l'élément de séparation 84 devient supérieure à l'adhérence F1 entre la masse d'adhésif 78 et le support 40 en fonction de la variation d'un paramètre de la masse d'adhésif 78, ici la température T de la masse 78. En l'espèce, lorsque la température T de la masse d'adhésif 78 est supérieure à un seuil prédéterminé T2 de température, l'adhérence F3 entre la masse 78 et l'élément de séparation 84 est supérieure à l'adhérence F1 entre la masse 78 et le support 40. T2 est supérieure ou égale à 100°C et de préférence supérieure ou égale à 120°C.

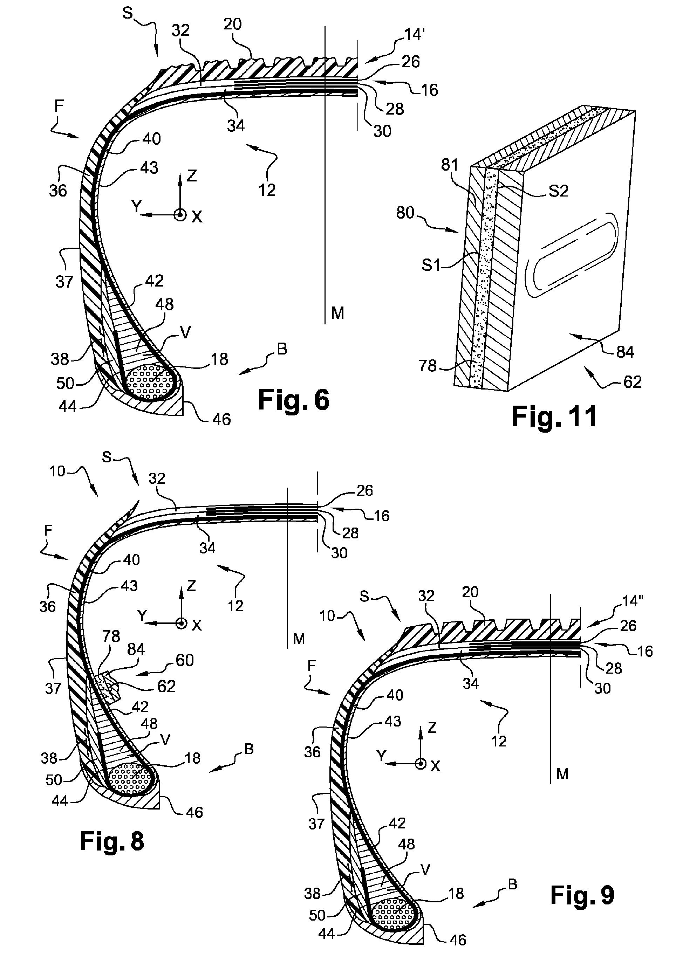

On va maintenant décrire les principales étapes d'un procédé de traitement selon l'invention, en l'espèce un procédé de rechapage, en référence aux figures 6, 7A-7E, 8 et 9. Au cours du procédé de rechapage, on fixe temporairement le dispositif 62 sur le support 40 de l'enveloppe pneumatique 10 en mettant en oeuvre des étapes d'un premier mode de réalisation d'un procédé de fixation temporaire.

On a représenté sur la figure 6, l'enveloppe pneumatique 10 de la figure 1 ayant parcouru de nombreux kilomètres. L'enveloppe pneumatique 10 comprend ainsi une bande de roulement 14' usée.

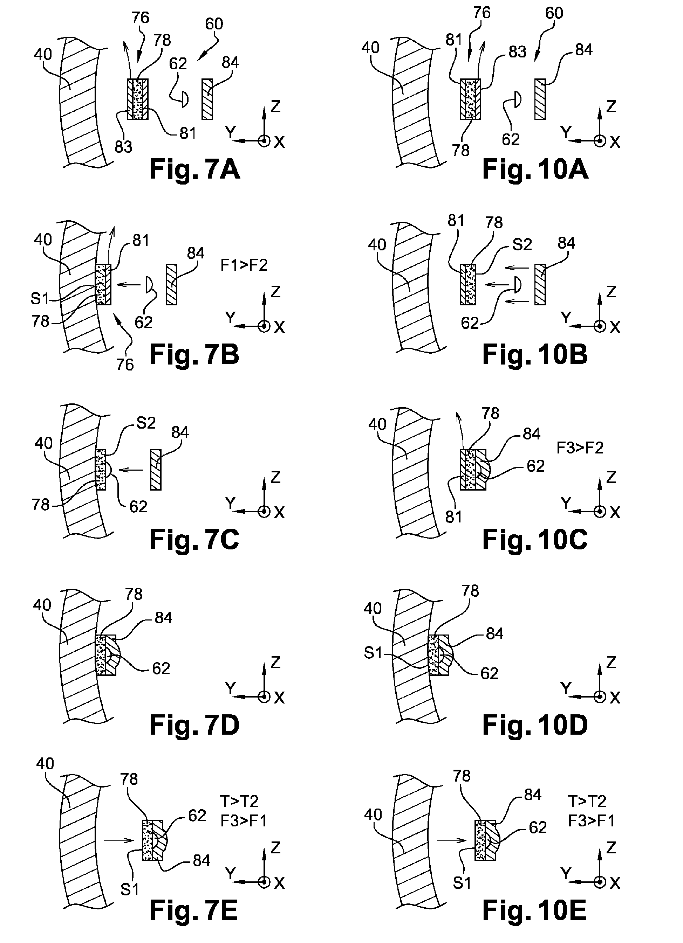

Lors de la réception de l'enveloppe 10 sur le site de rechapage, on nettoie la surface interne 43 de la nappe 40 par exemple au moyen d'un liquide nettoyant tel que celui par exemple commercialisé sous le nom Tire Cleaner© 16-471 par la société Patch Rubber. On obtient l'enveloppe et le kit 60 illustrés sur la figure 7A.

Ensuite, on retire la feuille de protection 83 de l'organe 76 de façon à dégager une surface S1 d'adhérence entre la masse d'adhésif 78 et le support 40.

Puis, on fait adhérer la surface d'adhérence S1 de la masse d'adhésif 78 sur le support 40. De préférence, l'étape d'adhérence est réalisée au moyen d'un gabarit de pose. Afin d'assurer une adhérence optimale de la masse 78, on passe une roulette sur la feuille 81. On obtient l'enveloppe représentée sur la figure 7B.

Ensuite, on retire la feuille 81 de l'organe 76 de façon à dégager une surface S2 d'adhérence entre la masse d'adhésif 78 et le dispositif électronique 62.

Puis, on fait porter le dispositif 62 par la masse 78. En l'espèce, on fait adhérer le dispositif électronique 62 sur la surface d'adhérence S2 de la masse d'adhésif 78. On positionne le dispositif 62 de sorte que la surface plane 66 soit au contact de la masse 78. On appuie sur le dispositif 62 de façon à chasser l'air susceptible d'être emprisonné entre le dispositif 62 et la masse 78 en partant du centre vers les bords du dispositif 62. On obtient l'enveloppe représentée sur la figure 7C.

Puis, on fait adhérer l'élément de séparation 84 sur la masse 78 de sorte que l'élément 84 recouvre entièrement la masse 78. On obtient l'enveloppe représentée sur la figure 7D comprenant l'élément de séparation 84, le dispositif 62 et la masse d'adhésif 78 adhérant sur le support 40 de l'enveloppe 10, en l'espèce sur la surface interne 43 de la nappe 40 en zone basse de l'enveloppe.

Ensuite, on traite l'enveloppe 10.

On retire la bande de roulement usée 14'. On obtient l'enveloppe 10 selon l'invention représentée sur la figure 8 comprenant la structure 12.

Puis, on fixe une bande de roulement neuve crue 14" sur la structure 12. En l'espèce, on pose la bande de roulement 14" neuve et crue sur l'armature 16. On positionne alors l'enveloppe comprenant la structure 12 et la bande de roulement 14" dans un moule de vulcanisation muni d'une membrane de cuisson (non représenté) et on vulcanise l'enveloppe.

Après vulcanisation, on retire l'enveloppe du moule. La température T de la masse d'adhésif 78 est alors telle que l'adhérence F3 entre la masse d'adhésif 78 et l'élément de séparation 84 devient supérieure à l'adhérence F1 entre la masse d'adhésif 78 et le support 40. En l'espèce, on maintient la masse 78 à une température T supérieure à T2, ici 105°C et de préférence 125°C. On sépare alors l'ensemble comprenant le dispositif électronique 62, la masse 78 et l'élément 84 de la nappe 40 en tirant sur l'élément 84 comme illustré sur la figure 7E. La masse 78 est alors entièrement séparée de la nappe 40 et aucune trace de la masse 78 ne subsiste sur la nappe 40.

On obtient l'enveloppe illustrée sur la figure 9 comprenant la structure 12 et la bande de roulement 14" vulcanisée neuve.

On va maintenant décrire les principales étapes d'un procédé de traitement selon l'invention, en l'espèce un procédé de rechapage, en référence aux figures 6, 8, 9 et 10A-10E. Au cours du procédé de rechapage, on fixe temporairement le dispositif 62 sur le support 40 de l'enveloppe pneumatique 10 en mettant en oeuvre des étapes d'un deuxième mode de réalisation d'un procédé de fixation temporaire. Les éléments analogues à ceux des figures précédentes sont désignés par des références identiques.

Lors du procédé de fixation temporaire, on retire la feuille 83 de l'organe 76 comme cela est illustré sur la figure 10A de façon à dégager la surface S2 d'adhérence entre la masse d'adhésif 78 et le dispositif électronique 62.

Puis, on fait adhérer le dispositif électronique 62 et l'élément de séparation 84 sur la surface d'adhérence S2 de la masse d'adhésif 78 de sorte que l'élément 84 recouvre entièrement la masse 78. On obtient l'enveloppe représentée sur la figure 10C.

Ensuite, on retire la feuille 81 de l'organe 76 de façon à dégager la surface S1 d'adhérence entre la masse d'adhésif 78 et le support 40.

Enfin, on fait adhérer la surface d'adhérence S1 sur le support 40. On obtient l'enveloppe représentée sur la figure 10D.

Ensuite, on procède de même que dans le premier mode de réalisation.

Parmi les avantages liés à l'invention et notamment à l'utilisation du procédé de fixation temporaire dans le cadre d'un procédé de rechapage, le kit selon l'invention permet de ne pas dégrader la nappe de gomme intérieure étanche de l'enveloppe. En effet, comme la masse d'adhésif s'enlève facilement pour une valeur du paramètre bien choisie, on peut s'affranchir de soumettre la nappe de gomme intérieure étanche à des contraintes mécaniques qui pourraient l'endommager afin de retirer le dispositif électronique.

On a représenté sur la figure 11 une variante du kit 60 représentée sous une forme assemblée et prête à l'utilisation. Cette variante est également représentée sur la figure 10C. L'organe de fixation 76 comprend le film de protection 80 adhérant sur la surface d'adhérence S1. L'élément de séparation 84 adhère sur la surface d'adhérence S2 de la masse d'adhésif 78. Le dispositif électronique 62 est porté par la masse d'adhésif 78, en l'espèce adhère à la surface d'adhérence S2 et est intercalé entre l'élément de séparation 84 et la surface S2.

Dans cette variante, l'adhérence entre la masse d'adhésif 78 et l'élément de séparation 84 est supérieure à l'adhérence entre la masse d'adhésif 78 et le film de protection 80. En outre, comme précédemment, l'adhérence entre la masse d'adhésif 78 et l'élément de séparation 84 devient supérieure à l'adhérence entre la masse d'adhésif 78 et le support 40 en fonction de la variation d'au moins un paramètre T de la masse d'adhésif 78.

L'invention ne se limite pas aux modes de réalisation précédemment décrits. En effet, on pourra fixer le dispositif électronique sur le support de l'enveloppe en intercalant le dispositif entre le support et la masse d'adhésif. En outre, la masse d'adhésif pourra être mise en place sur le support par pulvérisation, sans recourir à une masse conditionnée entre deux films comme dans l'organe 76 de fixation.

De plus, on pourra fixer temporairement le dispositif électronique 62 sur un support 40 de l'enveloppe pneumatique 10 au cours d'un procédé de traitement autre qu'un procédé de rechapage, par exemple un procédé de fabrication de l'enveloppe pneumatique 10.

## Revendications

1. Kit (60) pour la fixation temporaire d'un dispositif électronique (62) sur un support (40) d'une enveloppe pneumatique (10), **caractérisé en ce qu**'il comprend:
- un organe (76) de fixation comprenant une masse d'adhésif (78) pour la fixation du dispositif électronique (62) sur le support (40),
- un élément (84) de séparation pour séparer la masse d'adhésif (78) du support (40), apte à adhérer à la masse d'adhésif (78),
l'adhérence (F3) entre la masse d'adhésif (78) et l'élément de séparation (84) devenant supérieure à l'adhérence (F1) entre la masse d'adhésif (78) et le support (40) en fonction de la variation d'au moins un paramètre (T) de la masse d'adhésif (78).

2. Kit (60) selon la revendication précédente, dans lequel l'organe de fixation (76) comprend deux films (80, 82) de protection de la masse d'adhésif (78) entre lesquels est intercalée la masse d'adhésif (78).

3. Kit (60) selon la revendication précédente, dans lequel l'adhérence (F1) entre la masse d'adhésif (78) et le support (40) est supérieure à l'adhérence (F2) entre la masse d'adhésif (78) et au moins l'un des films de protection (80, 82).

4. Kit (60) selon la revendication 2 ou 3, dans lequel l'adhérence (F3) entre la masse d'adhésif (78) et l'élément de séparation (84) est supérieure à l'adhérence (F2) entre la masse d'adhésif (78) et au moins l'un des films de protection (80, 82).

5. Kit (60) selon la revendication 1, comprenant un dispositif électronique (62).

6. Kit (60) selon la revendication précédente, dans lequel l'élément de séparation (84) adhère sur une surface d'adhérence (S2) de la masse d'adhésif (78) entre la masse d'adhésif (78) et le dispositif électronique (62), et le dispositif électronique (62) est porté par la masse d'adhésif (78) et est intercalé entre l'élément de séparation (84) et la surface (S2) d'adhérence entre la masse d'adhésif (78) et le dispositif électronique (62).

7. Kit (60) selon la revendication précédente, dans lequel l'organe de fixation (76) comprend un film (80) de protection de la masse d'adhésif (78) adhérant sur une surface d'adhérence (S1) de la masse d'adhésif (78) entre la masse d'adhésif (78) et le support (40).

8. Enveloppe pneumatique (10), **caractérisée en ce qu**'elle comprend une masse d'adhésif (78) et un élément de séparation (84) d'un kit (60) selon l'une quelconque des revendications 1 à 7, la masse d'adhésif (78) adhérant sur un support (40) de l'enveloppe (10).

9. Enveloppe pneumatique (10) selon la revendication précédente, dans laquelle le support (40) comprend une nappe de gomme intérieure.

10. Procédé de fixation temporaire d'un dispositif électronique (62) sur un support (40) d'une enveloppe pneumatique (10), **caractérisé en ce que,** au moyen d'un kit (60) selon l'une quelconque des revendications 1 à 7 :
- on fait adhérer la masse d'adhésif (78) sur le support (40),
- on fait porter le dispositif électronique (62) par la masse d'adhésif (78),
- on fait adhérer l'élément de séparation (84) sur la masse d'adhésif (78),
- on fait varier le paramètre (T) de la masse d'adhésif (78) de sorte que l'adhérence entre la masse d'adhésif (78) et l'élément de séparation (84) devient supérieure à l'adhérence entre la masse d'adhésif (78) et le support (40),
- on sépare l'ensemble comprenant le dispositif électronique (62), la masse d'adhésif (78) et l'élément de séparation (84) du support (40) de l'enveloppe pneumatique (10) en tirant sur l'élément de séparation (84).

11. Procédé selon la revendication précédente, dans lequel on recouvre entièrement la masse d'adhésif (78) par l'élément de séparation (84).

12. Procédé selon la revendications 10 ou 11, dans lequel le paramètre est la température (T) de la masse d'adhésif (78).

13. Procédé selon la revendication précédente, dans lequel l'adhérence (F2') entre la masse d'adhésif (78) et l'élément de séparation (84) devient supérieure à l'adhérence (F1') entre la masse d'adhésif (78) et le support (40) lorsque la température (T) de la masse d'adhésif (78) est supérieure à un seuil prédéterminé (T2) de température, et l'on maintient la température (T) de la masse d'adhésif (78) supérieure au seuil prédéterminé (T2) de température avant de séparer l'ensemble comprenant le dispositif électronique (62), la masse d'adhésif (78) et l'élément de séparation (84) du support (40) de l'enveloppe pneumatique (10).

14. Procédé de traitement d'une enveloppe pneumatique (10), **caractérisé en ce que** l'on fixe temporairement un dispositif électronique (62) sur un support (40) de l'enveloppe pneumatique (10) par un procédé selon l'une quelconque des revendications 10 à 13, l'étape dans laquelle on fait varier le paramètre (T) de la masse d'adhésif (78) étant réalisée au cours d'une étape de traitement de l'enveloppe pneumatique, l'étape de séparation de l'ensemble comprenant le dispositif électronique (62), la masse d'adhésif et l'élément de séparation étant réalisée après l'étape de traitement.

15. Procédé selon la revendication précédente, dans lequel, l'enveloppe pneumatique (10) comprenant une structure (12) et une bande de roulement usée (14'), au cours de l'étape de traitement:
- on retire la bande de roulement usée (14'),
- on fixe une bande de roulement neuve crue (14") sur la structure (12),
- on vulcanise l'ensemble comprenant la structure (12) et la bande de roulement neuve crue (14") dans un moule de vulcanisation.

## Patentansprüche

1. Bausatz (60) zur vorübergehenden Befestigung einer elektronischen Vorrichtung (62) an einem Träger (40) eines Reifenmantels (10), **dadurch gekennzeichnet, dass** er enthält:
- ein Befestigungsorgan (76), das eine Klebstoffmasse (78) zur Befestigung der elektronischen Vorrichtung (62) am Träger (40) enthält,
- ein Trennelement (84) zum Trennen der Klebstoffmasse (78) vom Träger (40), das an der Klebstoffmasse (78) haften kann,
wobei die Haftfähigkeit (F3) zwischen der Klebstoffmasse (78) und dem Trennelement (84) abhängig von der Änderung mindestens eines Parameters (T) der Klebstoffmasse (78) größer wird als die Haftfähigkeit (F1) zwischen der Klebstoffmasse (78) und dem Träger (40).

2. Bausatz (60) nach dem vorhergehenden Anspruch, wobei das Befestigungsorgan (76) zwei Schutzfolien (80, 82) für die Klebstoffmasse (78) enthält, zwischen die die Klebstoffmasse (78) eingefügt ist.

3. Bausatz (60) nach dem vorhergehenden Anspruch, wobei die Haftfähigkeit (F1) zwischen der Klebstoffmasse (78) und dem Träger (40) größer ist als die Haftfähigkeit (F2) zwischen der Klebstoffmasse (78) und mindestens einer der Schutzfolien (80, 82).

4. Bausatz (60) nach Anspruch 2 oder 3, wobei die Haftfähigkeit (F3) zwischen der Klebstoffmasse (78) und dem Trennelement (84) größer ist als die Haftfähigkeit (F2) zwischen der Klebstoffmasse (78) und mindestens einer der Schutzfolien (80, 82).

5. Bausatz (60) nach Anspruch 1, der eine elektronische Vorrichtung (62) enthält.

6. Bausatz (60) nach dem vorhergehenden Anspruch, wobei das Trennelement (84) an einer Haftfläche (S2) der Klebstoffmasse (78) zwischen der Klebstoffmasse (78) und der elektronischen Vorrichtung (62) haftet, und die elektronische Vorrichtung (62) von der Klebstoffmasse (78) getragen wird und zwischen dem Trennelement (84) und der Haftfläche (S2) zwischen der Klebstoffmasse (78) und der elektronischen Vorrichtung (62) eingefügt wird.

7. Bausatz (60) nach dem vorhergehenden Anspruch, wobei das Befestigungsorgan (76) eine Schutzfolie (80) der Klebstoffmasse (78) enthält, die an einer Haftfläche (S1) der Klebstoffmasse (78) zwischen der Klebstoffmasse (78) und dem Träger (40) haftet.

8. Reifenmantel (10), **dadurch gekennzeichnet, dass** er eine Klebstoffmasse (78) und ein Trennelement (84) eines Bausatzes (60) nach einem der Ansprüche 1 bis 7 enthält, wobei die Klebstoffmasse (78) an einem Träger (40) des Mantels (10) haftet.

9. Reifenmantel (10) nach dem vorhergehenden Anspruch, wobei der Träger (40) eine innere Gummilage enthält.

10. Verfahren zur vorübergehenden Befestigung einer elektronischen Vorrichtung (62) an einem Träger (40) eines Reifenmantels (10), **dadurch gekennzeichnet, dass** mittels eines Bausatzes (60) nach einem der Ansprüche 1 bis 7:
- die Klebstoffmasse (78) an den Träger (40) angehaftet wird,
- die elektronische Vorrichtung (62) von der Klebstoffmasse (78) getragen wird,
- das Trennelement (84) an die Klebstoffmasse (78) angehaftet wird,
- der Parameter (T) der Klebstoffmasse (78) so verändert wird, dass die Haftfähigkeit zwischen der Klebstoffmasse (78) und dem Trennelement (84) größer wird als die Haftfähigkeit zwischen der Klebstoffmasse (78) und dem Träger (40),
- die die elektronische Vorrichtung (62), die Klebstoffmasse (78) und das Trennelement (84) enthaltende Einheit vom Träger (40) des Reifenmantels (10) getrennt wird, indem am Trennelement (84) gezogen wird.

11. Verfahren nach dem vorhergehenden Anspruch, wobei die Klebstoffmasse (78) ganz mit dem Trennelement (84) bedeckt wird.

12. Verfahren nach Anspruch 10 oder 11, wobei der Parameter die Temperatur (T) der Klebstoffmasse (78) ist.

13. Verfahren nach dem vorhergehenden Anspruch, wobei die Haftfähigkeit (F2') zwischen der Klebstoffmasse (78) und dem Trennelement (84) größer wird als die Haftfähigkeit (F1') zwischen der Klebstoffmasse (78) und dem Träger (40), wenn die Temperatur (T) der Klebstoffmasse (78) höher als eine vorbestimmte Temperaturschwelle (T2) ist, und die Temperatur (T) der Klebstoffmasse (78) höher als die vorbestimmte Temperaturschwelle (T2) gehalten wird, ehe die die elektronische Vorrichtung (62), die Klebstoffmasse (78) und das Trennelement (84) enthaltende Einheit vom Träger (40) des Reifenmantels (10) getrennt wird.

14. Verfahren zur Bearbeitung eines Reifenmantels (10), **dadurch gekennzeichnet, dass** eine elektronische Vorrichtung (62) durch ein Verfahren nach einem der Ansprüche 10 bis 13 vorübergehend an einem Träger (40) des Reifenmantels (10) befestigt wird, wobei der Schritt, in dem der Parameter (T) der Klebstoffmasse (78) verändert wird, während eines Bearbeitungsschritts des Reifenmantels durchgeführt wird, wobei der Schritt der Trennung der die elektronische Vorrichtung (62), die Klebstoffmasse und das Trennelement enthaltenden Einheit nach dem Bearbeitungsschritt durchgeführt wird.

15. Verfahren nach dem vorhergehenden Anspruch, wobei, wenn der Reifenmantel (10) eine Konstruktion (12) und einen abgenutzten Laufstreifen (14') enthält, während des Bearbeitungsschritts:
- der abgenutzte Laufstreifen (14') entfernt wird,
- ein neuer Rohlaufstreifen (14") an der Konstruktion (12) befestigt wird,
- die die Konstruktion (12) und den neuen Rohlaufstreifen (14") enthaltende Einheit in einer Vulkanisierungsform vulkanisiert wird.

## Claims

1. Kit (60) for the temporary attachment of an electronic device (62) to a support (40) for a tyre casing (10), **characterized in that it includes:**
- an attachment member (76) comprising an adhesive mass (78) for attaching the electronic device (62) to the support (40),
- a separation element (84) for separating the adhesive mass (78) from the support (40) that is able to adhere to the adhesive mass (78),
the adhesion (F3) between the adhesive mass (78) and the separation element (84) exceeding the adhesion (F1) between the adhesive mass (78) and the support (40) as a function of the variation of at least one parameter (T) of the adhesive mass (78).

2. Kit (60) according to the preceding claim, in which the attachment member (76) includes two films (80, 82)To protect the adhesive mass (78) between which the adhesive mass (78) is inserted.

3. Kit (60) according to the preceding claim, in which the adhesion (F1) between the adhesive mass (78) and the support (40) is greater than the adhesion (F2) between the adhesive mass (78) and at least one of the protective films (80, 82).

4. Kit (60) according to Claim 2 or 3, in which the adhesion (F3) between the adhesive mass (78) and the separation element (84) is greater than the adhesion (F2) between the adhesive mass (78) and at least one of the protective films (80, 82).

5. Kit (60) according to Claim 1, including an electronic device (62).

6. Kit (60) according to the preceding claim, in which the separation element (84) adheres to an adhesion surface (S2) of the adhesive mass (78) between the adhesive mass (78) and the electronic device (62), and the electronic device (62) is held by the adhesive mass (78) and is inserted between the separation element (84) and the adhesion surface (S2) between the adhesive mass (78) and the electronic device (62).

7. Kit (60) according to the preceding claim, in which the attachment member (76) includes a protective film (80) for the adhesive mass (78) adhering to an adhesion surface (S1) of the adhesive mass (78) between the adhesive mass (78) and the support (40).

8. Tyre casing (10), **characterized in that** it includes an adhesive mass (78) and a separation element (84) of a kit (60) according to any one of claims 1 to 7, the adhesive mass (78) adhering to a support (40) of the envelope (10).

9. Tyre casing (10) according to the preceding claim, in which the support (40) includes an inner rubber ply.

10. Method for temporarily attaching an electronic device (62) to a support (40) of a tyre casing (10), **characterized in that,** using a kit (60) according to any one of Claims 1 to 7:
- the adhesive mass (78) is adhered to the support (40),
- the electronic device (62) is held by the adhesive mass (78),
- the separation element (84) is adhered to the adhesive mass (78),
- the parameter (T) of the adhesive mass (78) is altered such that the adhesion between the adhesive mass (78) and the separation element (84) exceeds the adhesion between the adhesive mass (78) and the support (40),
- the unit formed by the electronic device (62), the adhesive mass (78) and the separation element (84) is separated from the support (40) of the tyre casing (10) by pulling on the separation element (84).

11. Method according to the preceding claim, in which the adhesive mass (78) is entirely covered by the separation element (84).

12. Method according to Claims 10 or 11, in which the parameter is the temperature (T) of the adhesive mass (78).

13. Method according to the preceding claim, in which the adhesion (F2') between the adhesive mass (78) and the separation element (84) exceeds the adhesion (F1') between the adhesive mass (78) and the support (40) when the temperature (T) of the adhesive mass (78) is greater than a predetermined temperature threshold (T2), and the temperature (T) of the adhesive mass (78) is kept above a predetermined temperature threshold (T2) before the unit formed by the electronic device (62), the adhesive mass (78) and the separation element (84) is separated from the support (40) of the tyre casing (10).

14. Processing method for a tyre casing (10), **characterized in that** an electronic device (62) is attached temporarily to a support (40) of the tyre casing (10) using a method according to any one of claims 10 to 13, the step in which the parameter (T) of the adhesive mass (78) is varied being performed during a processing step of the tyre casing, the step in which the unit formed by the electronic device (62), the adhesive mass and the separation element is separated being performed after the processing step.

15. Method according to the preceding claim, in which, as the tyre casing (10) comprises a structure (12) and a worn tread (14'), during the processing step:
- the worn tread (14') is removed,
- a new raw tread (14") is attached to the structure (12),
- the unit comprising the structure (12) and the new raw tread (14") is vulcanized in a vulcanization mould.
